(19) Europäisches Patentamt

European Patent Office

Office européen des brevets

(11) **EP 0 625 741 B1**

(12) **EUROPÄISCHE PATENTSCHRIFT**

(45) Veröffentlichungstag und Bekanntmachung des Hinweises auf die Patenterteilung:
**04.11.1998 Patentblatt 1998/45**

(51) Int Cl.⁶: $G06E\ 1/02$, $H04Q\ 11/00$

(21) Anmeldenummer: **93108122.8**

(22) Anmeldetag: **18.05.1993**

(54) **Optischer Korrelator**

Optical correlator

Corrélateur optique

(84) Benannte Vertragsstaaten:
**AT BE CH DE FR GB LI NL SE**

(43) Veröffentlichungstag der Anmeldung:
**23.11.1994 Patentblatt 1994/47**

(73) Patentinhaber: **SIEMENS AKTIENGESELLSCHAFT**
**80333 München (DE)**

(72) Erfinder: **Osborne, Robert, Dr.-Ing.**
**W-8000 München 70 (DE)**

(56) Entgegenhaltungen:
**EP-A- 0 048 047**

- **IEEE LCS. THE MAGAZINE OF LIGHTWAVE COMMUNICATION SYSTEMS Mai 1990, NEW YORK US Seiten 54 - 67 , XP128312 PRUCNAL ET AL 'Optically-Processed Routing for Fast Packet Switching'**
- **OPTICS AND PHOTONICS NEWS, Dec-92, US, page 31, GLANCE et al 'Optical Wavelength Shifter for Wavelength-Division-Multiplexed Networks'**
- **PROCEEDINGS OF THE INT. CONF. ON COMPUTER COMMUNICATION, vol 9, Oct-88, AMSTERDAM NL page 144-148, 609-614, GREEN 'The evolution to all-optical computer networks'**

Bemerkungen:
Die Akte enthält technische Angaben, die nach dem Eingang der Anmeldung eingereicht wurden und die nicht in dieser Patentschrift enthalten sind.

## Beschreibung

Zur leitungsgebundenen Nachrichtenübertragung in Kommunikationssystemen werden in zunehmendem Maße Glasfasern als Übertragungsmedium eingesetzt. Dabei ist die mögliche Übertragungsrate weniger durch die Übertragungsstrecken als durch die Signalverarbeitung begrenzt. Hier bietet die optische Signalverarbeitung Vorteile bezüglich der Verarbeitungsgeschwindigkeit gegenüber einer Signalverarbeitung, die sich der Verarbeitung von in elektrische Signale umgesetzte Signale bedient.

Die Erfindung betrifft eine Anordnung und ein Verfahren zur Auswertung einer vorgegebenen Kombination von durch hohe bzw. niedrige Intensitätspegel dargestellte Bits einer Mehrzahl von optischen Signalen.

Aus IEEE LCS MAGAZINE, Mai 1990, Seiten 54 ... 67 ist eine als Korrelator bezeichnete optische Auswerteeinrichtung bekannt, bei dem ein seriell übertragenes optisches Signal auf eine Mehrzahl paralleler Verzögerungsleitungen mit jeweils unterschiedlicher Verzögerungsdauer aufgeteilt wird. Die optischen Leistungen der von den Verzögerungsleitungen abgegebenen Signale werden summiert und einem Schwellwertentscheider zugeführt. Der Schwellwertentscheider gibt bei Überschreitung eines vorgegebenen Schwellwertes seines Eingangssignals ein Ausgangssignal ab und zeigt damit eine Autokorrelationsspitze des optischen Eingangssignals des Korrelators an. Dieser Korrelator bedarf, gemessen an der Anzahl der unterscheidbaren Codewörter, einer langen Codewortlänge, um einen ausreichenden Amplitudenabstand der Autokorrelationsspitze von den durch Kreuzkorrelation bedingten Nebenmaxima zu erzielen, und darüber hinaus eines Schwellwertschalters mit einer hohen oberen Grenzfrequenz zur Erkennung der Autokorrelationsspitze.

Das gleiche gilt auch für eine aus Electronics Letters, November 1990, Vol. 26, Nr. 24, Seiten 1990...1992 bekannten optischen Sende-Empfangseinrichtung, bei der die zu übertragenen Daten senderseitig eine Mehrzahl von Verzögerungsleitungen mit jeweils unterschiedlicher Verzögerungsdauer parallel durchlaufen und empfangsseitig nach Durchlaufen von zu den senderseitigen gleichen Verzögerungsleitungen zu einem Summensignal zusammengefaßt werden. Das Summensignal, dem ein Synchronisationssignal hinzugefügt wird, wird einem Photodetektor zugeführt. Das Signal des Photodetektors wird einem Schwellwertentscheider zugeführt, der bei Überschreiten eines Schwellwertes des zugeführten Signals ein Ausgangssignal abgibt.

Dieser Korrelator vermag gegenüber dem zuvor genannten Korrelator bei der gleichen relativ langen Codewortlänge eine größere Anzahl von Codewörtern zu unterscheiden, allerdings unter Hinnahme des Aufwands für die Synchronisation.

Der Erfindung liegt das Problem zugrunde, einen optischen Korrelator anzugeben, der ohne redundante Signale eine vorgegebene Kombination einer Mehrzahl von Signalen eindeutig auswertet.

Die Erfindung wird durch die in den Ansprüchen 1 bzw. 8 angegebenen Merkmale gelöst.

Die Erfindung schafft eine Anordnung und ein Verfahren zur Auswertung einer Mehrzahl von zueinander inkohärenten, optischen Signalen, wobei der Aufwand für die Bereitstellung und Übertragung zusätzlicher Signale vermieden ist. Weiter bedarf der Gegenstand gemäß der Erfindung keiner Synchronisation zwischen dem Auftreten der Mehrzahl von Signalen und der Detektionseinrichtung. Darüber hinaus genügt als Detektionseinrichtung ein Schwellwertentscheider mit einer - gegenüber der sonst zur Unterscheidung zwischen Autokorrelationsspitze und Kreuzkorrelation erforderlichen Grenzfrequenz - niedrigen oberen Grenzfrequenz.

In weiterer Ausgestaltung der Erfindung wird die Mehrzahl von optischen Signalen durch Aufteilung eines seriell übertragenen Signals auf eine Mehrzahl von Glasfaserleitungen und Verzögerung zwischen den einzelnen Glasfasern um die Rangfolge von in dem seriell übertragenen Signal enthaltenen, charakteristischen Bits erzeugt. Durch diese Maßnahme sind in dem seriell übertragenen Signal asynchron übertragene Codeworte bzw. Adressen mit einer vorgegebenen Kombination von Bits auswertbar.

In weiterer Ausgestaltung der Erfindung sind die einzelnen Signale der Mehrzahl von Signalen selektiv auswählbar. Durch diese Maßnahme sind wahlfreie Kombinationen der Mehrzahl von Signalen auswertbar.

Bei weiteren Ausgestaltungen der Erfindung werden als Invertiereinrichtung, als Detektionseinrichtung bzw. als Selektionseinrichtung optische Inverter eingesetzt. Bei der Verwenoung von optischen Invertern bei einem Gegenstand der Erfindung wirken sich deren hohe Schaltgeschwindigkeit, der konstante und hohe Ausgangspegel sowie der geringe, zur Überschreitung des eingangsseitigen Schwellwertes erforderlichen Eingangpegels vorteilhaft aus.

Die Erfindung wird nun als Ausführungsbeispiel in einem zum Verständnis erforderlichen Umfang anhand von Figuren näher erläutert. Dabei zeigen:

Figur 1    eine Anordnung, in der die Erfindung realisiert ist,

Figur 2    eine Anordnung zur Umsetzung eines seriell übertragenen optischen Signals in eine Mehrzahl unterschiedlich verzögerter optischer Signale,

Figur 3    eine Anordnung zur Umsetzung eines seriell übertragenen optischen Signals in eine Mehrzahl unterschiedlich verzögerter optischer Signale, wobei die unterschiedlich verzögerten optischen Signale selektiv auswählbar sind.

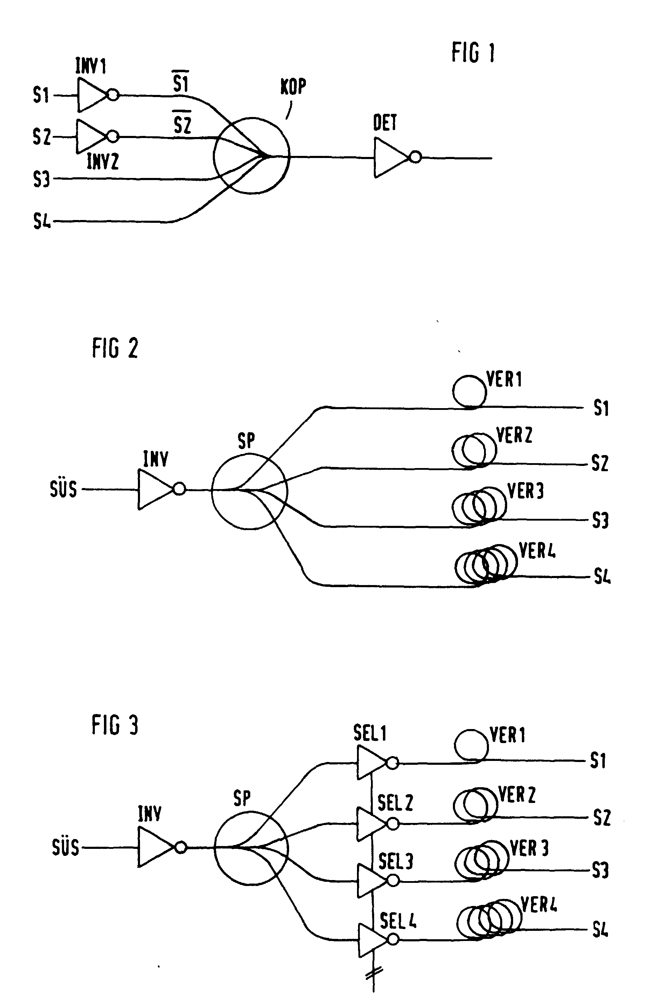

Der Anordnung nach Figur 1 sind über Glasfaserleitungen die optischen Signale S1...S4 zugeführt. Die Signale sind den Eingängen eines herkömmlichen n x 1 Kopplers KOP zugeführt, wobei die Signale S1 und S2 jeweils über eine optische Invertiereinrichtung INV1 bzw. INV2 als invertierte Signale $\overline{S1}$ bzw. $\overline{S2}$ zugeführt sind. Die optischen Invertiereinrichtungen INV1, INV2 weisen folgende Eigenschaften auf: Wird der optischen Invertiereinrichtung eingangsseitig ein optisches Signal mit einer oberhalb einer vorgegebenen Schwelle liegenden Intensität zugeführt, so gibt sie ausgangsseitig kein optisches Signal ab. Wird der optischen Invertiereinrichtung ein optisches Signal mit einer unterhalb der vorgegebenen Schwelle liegenden Intensität zugeführt, so gibt sie ausgangsseitig ein optisches Signal hoher Intensität ab. Die Invertiereinrichtungen können durch beispielsweise in B. Glance, J. Wiesenfeld "Optical Wavelength Shifter for Wavelength-Division-Multiplexed Networks", Optics and Photonics News, Dec. 1992, S. 31, beschriebene optische Inverter gegeben sein. Bei der vorliegenden Anwendung machen sich die hohe Schaltgeschwindigkeit, die hohe Intensität des am Ausgang abgegebenen optischen Signals und eine relativ niedrige, zur Überschreitung der vorgegebenen Schwelle erforderlichen Intensität des dem Eingang zugeführten Signals vorteilhaft bemerkbar. Alternativ dazu kann die Invertiereinrichtung durch eine als Detektor wirkende Fotodiode gegeben sein, die über eine Treiberschaltung eine Laserdiode oder eine Leuchtdiode (LED) dann zur Aussendung eines optischen Signals ansteuert, wenn die Intensität des von der Fotodiode empfangenen optischen Signals unterhalb der vorgegebenen Schwelle liegt.

In dem Koppler werden die Intensitäten der eingangsseitig zugeführten optischen Signale summiert und an den Ausgang weitergeleitet. Der Ausgang des Kopplers ist über eine Glasfaserleitung mit dem Eingang eines Detektors DET verbunden. Der Detektor kann durch eine der oben beschriebenen Invertiereinrichtungen gegeben sein. Erfindungsgemäß gibt der Detektor an seinem Ausgang nur dann ein signifikantes Ergebnis ab, wenn die Intensität der summierten optischen Signale an seinem Eingang niedriger ist als der hohe Intensitätspegel eines einzelnen optischen Signals. Zur Erfüllung dieser Bedingung ist die vorgegebene Schwelle des Detektors so eingestellt, daß der Detektor erst bei einem eingangsseitigen optischen Signal mit einer niedrigeren Intensität als der Intensität eines einzelnen optischen Signals mit hohem Internsitätspegel, beispielsweise erst bei einer Intensität, die der Hälfte der hohen Intensität eines einzelnen optischen Signal entspricht, ein signifikantes Signal an seinem Ausgang abgibt. Der Detektor gibt also nur dann ausgangsseitig ein signifikantes Signal ab, wenn keines der dem Koppler eingangsseitig zugeführten optischen Signale einen hohen Intensitätspegel aufweist. Das von dem Detektor abgegebene Signal bildet also ein Signal, das die dem Koppler eingangsseitig zugeführten Signale gemäß der logischen NOR-Funktion bewertet.

Soll nun durch die insoweit beschriebene Anordnung eine Kombination von Signalen ausgewertet werden, bei der die Signale ohnehin durch einen niedrigen Intensitätspegel dargestellt sind, so genügt es, diese Signale wie die Signale S3 und S4 direkt dem Koppler zuzuführen. Im allgemeinen weist eine Kombination von Signalen eine beliebige Kombination von durch hohe bzw. niedrige Intensitätspegel dargestellte Bits auf. Zur Erfüllung der oben genannten Bedingung werden die bei der vorgegebenen Kombination einen hohen Intensitätspegel aufweisenden optischen Signale, wie die Signale S1 bzw. S2, jeweils über eine optische Invertiereinrichtung INV1, INV2 dem Koppler eingangsseitig zugeführt.

Die Logikstruktur der dargestellten Anordnung erlaubt bei geeigneter Gruppierung die Realisierung sämtlicher Logikfunktionen, womit sogenanntes Optical Computing machbar ist.

Die insoweit beschriebene Anordnung wertet die Kombination einer Mehrzahl von zeitgleich vorliegenden Signalen aus. Soll nun die Kombination von hohen und niedrigen Intensitätspegeln eines seriell übertragenen optischen Signals ausgewertet werden, so wird die insoweit beschriebene Anordnung durch eine Anordnung gemäß Figur 2 ergänzt.

In Figur 2 wird ein seriell übertragenes optisches Signal SÜS über eine oder zwei Invertiereinrichtung INV einem Splitter SP zugeführt. Die lediglich bedarfsweise vorgesehene(n) eine oder zwei Invertiereinrichtung(en), die durch die weiter oben beschriebenen Invertiereinrichtungen gegeben sein können, dienen zum einen der Erzeugung der gewünschten Pegelzustände des seriell übertragenen Signals und stellen zum anderen ausgangsseitig konstante Pegelhöhen sicher.

In dem seriell übertragenen Signal mögen Signalworte mit einer vorgegebenen Anzahl von Bits enthalten sein. Weiter mögen in den in einem Signalwort enthaltenen Bits eine Anzahl von charakteristischen Bits umfaßt sein. Die Kombination der charakteristischen Bits ist durch die zur eindeutigen Identifizierung eines Signalworts erforderlichen Bits gegeben. Das seriell übertragene Signal wird durch den Splitter auf eine der Anzahl von charakteristischen Bits in einem Signalwort gleichende Anzahl von Glasfaserleitungen aufgeteilt. In jeder dieser Glasfaserleitungen wird das seriell übertragene Signal mit Hilfe einer Verzögerungseinrichtung VER1...VER4 um die Rangfolge eines charakteristischen Bits verzögert. Die Verzögerungseinrichtungen können in an sich bekannter Weise durch entsprechend lange Verzögerungsleitungen gegeben sein, die zu einem Bund aufgerollt sein mögen. In Signalflußrichtung nach den Verzögerungsleitungen treten die charakteristischen Bits des Signalwortes als zeitgleiche optische Signale S1...S4 auf. Die von der Anordnung nach Figur 2 abgegebenen Signale mögen der Anordnung nach Figur 1 zugeführt sein.

Figur 3 zeigt eine Anordnung, bei der jedes der Mehrzahl von Signalen S1...S4 inaktiv schaltbar ist. Ein seriell übertragenes Signal wird, ebenso wie für Figur 2 beschrieben, gegebenenfalls über eine oder zwei Invertiereinrichtung(en) INV und über einen Splitter SP auf eine Mehrzahl von Glasfaserleitungen aufgeteilt. In jeder der Mehrzahl von Glasfaserleitungen ist eine Selektionseinrichtung SEL1...SEL4 angeordnet. Die Selektionseinrichtungen können wiederum durch die oben beschriebenen Invertiereinrichtungen gegeben sein, wobei der Ausgang einer solchen Invertiereinrichtung schon dadurch inaktiv schaltbar ist, indem die Betriebsspannung zu der Selektiereinrichtung unterbrochen wird, womit am Ausgang der Invertiereinrichtung ein niedriger Intensitätspegel anliegt. Zu jeder der Selektionseinrichtungen ist eine Verzögerungseinrichtung in Serie angeordnet. Die Verzögerungseinrichtungen verzögern, wie für Figur 2 beschrieben, die aufgeteilten Signale gegeneinander entsprechend der Rangfolge eines charakteristischen hohen bzw. niedrigen Intensitätspegel innerhalb des seriell übertragenen Signals.

Für die erfindungsgemäße Funktion ist es erforderlich, die Inaktiv-Schaltung eines der Mehrzahl von Signalen derart vorzunehmen, daß das inaktiv geschaltete Signal zu dem zusammengeführten Signal am Detektoreingang nur mit einem niedrigen Intensitätspegel beiträgt. Für Signale, wie z.B. das Signal S1 bzw. S2, für die ohnehin eine Invertiereinrichtung vorgesehen ist, kann die Inaktiv-Schaltung in vorteilhafter Weise durch die Unterbrechung der Betriebsspannungsversorgung für die betreffende Invertiereinrichtung INV1 bzw. INV2 vorgenommen werden, wobei eine gesonderte Selektionseinrichtung entbehrlich ist. Durch geeignete Ansteuerung der Selektionseinrichtungen sind beliebige Kombinationen der Mehrzahl von Signalen auswertbar. Mit einer Anordnung nach Figur 3, die mit einer Anordnung nach Figur 1 verbunden ist, sind beliebige Kombinationen aufweisende, asynchron seriell übertragene Signalworte detektierbar.

## Patentansprüche

1. Anordnung zur Auswertung einer vorgegebenen Kombination von durch hohe bzw. niedrige Intensitätspegel dargestellte Bits einer Mehrzahl von optischen Signalen (S1...S4), umfasssend

   - eine Mehrzahl von Glasfaserleitungen zur Führung jeweils eines optischen Signals,
   - einen Koppler (KOP), dessen Eingänge mit den Glasfaserleitungen verbunden sind, zur Summierung der seinen Eingängen zugeführten optischen Signale
   - einen Detektor (DET) mit Schwellenwertentscheider, dessen Eingang mit dem Ausgang des Kopplers verbunden ist

   **dadurch gekennzeichnet,** daß

   - in den Bruchteil von Glasfaserleitungen, der bei Vorliegen der vorgegebenen Kombination von Signalen durch hohe Intensitätspegel dargestellte Bits führt, jeweilige Invertiereinrichtungen (INV1, INV2) eingefügt sind
   - am Ausgang des Detektors nur dann ein signifikantes Ergebnis abgebbar ist, wenn das an seinem Eingang zugeführte Signal einen niedrigeren Intensitätspegel aufweist als der hohe Intensitätspegel eines einzelnen optischen Signals.

2. Anordnung nach Anspruch 1, **dadurch gekennzeichnet,** daß

   - eine Glasfaserleitung zur Führung eines seriell übertragenes optischen Signals, in dem eine vorgegebene Folge von charakteristischen Bits ein Signalwort bildet, gegeben ist,
   - die Glasfaserleitung über einen Splitter (SP) mit der Mehrzahl von Glasfaserleitungen zur Zuführung des optischen Signals verbunden ist,
   - in jeder der Mehrzahl von Glasfaserleitungen eine Verzögerungseinrichtung (VER1...VER4) angeordnet ist, derart, daß das optische Signal um die Rangfolge eines charakteristischen Bits innerhalb des Signalwortes verzögert wird.

3. Anordnung nach Anspruch 1 oder 2, **dadurch gekennzeichnet,** daß der Detektor durch einen optischen Invertierer gegeben ist.

4. Anordnung nach Anspruch 1, 2 oder 3, **dadurch gekennzeichnet,** daß die Invertiereinrichtung durch einen optischen Invertierer gegeben ist.

5. Anordnung nach einem der Ansprüche 3 oder 4, **dadurch gekennzeichnet,** daß der optische Invertierer durch die Hintereinanderschaltung einer Fotodiode und eines Licht aussendenden Halbleiterelementes gegeben ist.

6. Anordnung nach Anspruch 5, **dadurch gekennzeichnet,** daß das Licht aussendende Halbleiterelement durch eine Laserdiode gegeben ist.

7. Anordnung nach Anspruch 5, **dadurch gekennzeichnet,** daß das Licht aussendende Halbleiterelement durch eine Licht emittierende Diode (LED) gegeben ist.

8. Verfahren zur Auswertung einer vorgegebenen Kombination von durch hohe bzw. niedrige Intensitätspegel dargestellte Bits einer Mehrzahl von optischen Signalen, demzufolge

- die optischen Signale zusammengeführt werden und
- die Summe der Intensitäten der zusammengeführten optischen Signale ausgewertet wird,

**dadurch gekennzeichnet,** daß

- die durch hohe Intensitätspegel dargestellte Bits der vorgegebenen Kombination vor der Zusammenführung in niedrige Intensitätspegel invertiert werden und
- nur dann ein signifikantes Ergebnis ermittelt wird, wenn die Summe der Intensitäten der zusammengeführten Signale kleiner ist als der hohe Intensitätspegel eines einzelnen optischen Signals.

9. Verfahren nach Anspruch 8,
   **dadurch gekennzeichnet,** daß

   - die Mehrzahl von optischen Signalen (S1..S4) dadurch erzeugt wird, daß ein seriell übertragenes optisches Signal (SÜS) in die Mehrzahl von Signalen aufgeteilt wird und
   - jedes aufgeteilte Signal entsprechend der Rangfolge eines hohen bzw. niedrigen Intensitätspegels innerhalb des seriell übertragenen optischen Signals verzögert wird.

10. Verfahren nach Anspruch 8 oder 9,
    **dadurch gekennzeichnet,**
    daß ein jedes einzelnes der Mehrzahl von optischen Signalen inaktiv schaltbar ist.

**Claims**

1. Arrangement for evaluating a prescribed combination of bits, represented by high or low intensity levels, of a plurality of optical signals (S1...S4), comprising

   - a plurality of glass fibre lines for guiding in each case one optical signal,
   - a coupler (KOP) whose inputs are connected to the glass fibre lines, for summing the optical signals fed to its inputs,
   - a detector (DET) with a threshold discriminator whose input is connected to the output of the coupler,

   characterized in that

   - respective inverting devices (INV1, INV2) are inserted into the fraction of glass fibre lines which, given the presence of the prescribed combination of signals, guides bits represented by high intensity levels, and
   - a significant result can be supplied at the output of the detector only if the signal fed to its input has a lower intensity level than the high intensity level of an individual optical signal.

2. Arrangement according to Claim 1, characterized in that

   - a glass fibre line is provided for guiding a serially transmitted optical signal in which a prescribed sequence of characteristic bits forms a signal word,
   - the glass fibre line is connected via a splitter (SP) to the majority of glass fibre lines for feeding the optical signal, and
   - a time-delay device (VER1...VER4) is arranged in each of the plurality of glass fibre lines in such a way that the optical signal is delayed by the order of priority of a characteristic bit inside the signal word.

3. Arrangement according to Claim 1 or 2, characterized in that the detector is provided by an optical inverter.

4. Arrangement according to Claim 1, 2 or 3, characterized in that the inverting device is provided by an optical inverter.

5. Arrangement according to one of Claims 3 or 4, characterized in that the optical inverter is provided by the series connection of a photodiode and a light-emitting semiconductor element.

6. Arrangement according to Claim 5, characterized in that the light-emitting semiconductor element is provided by a laser diode.

7. Arrangement according to Claim 5, characterized in that the light-emitting semiconductor element is provided by a light-emitting diode (LED).

8. Method for evaluating a prescribed combination of bits, represented by high or low intensity levels, of a plurality of optical signals, in accordance with which

   - the optical signals are combined and
   - the sum of the intensities of the combined optical signals is evaluated,

   characterized in that

   - the bits, represented by high intensity levels, of the prescribed combination are inverted into low intensity levels before being combined, and

- a significant result is determined only if the sum of the intensities of the combined signals is smaller than the high intensity level of an individual optical signal.

9. Method according to Claim 8, characterized in that

- the plurality of optical signals (S1..S4) are generated by splitting a serially transmitted optical signal (SÜS) into the plurality of signals, and
- each split signal is delayed inside the serially transmitted optical signal in accordance with the order of priority of a high or low intensity level.

10. Method according to Claim 8 or 9, characterized in that each individual one of the plurality of optical signals can be switched to be inactive.

## Revendications

1. Agencement de traitement d'une combinaison prescrite de bits représentés par des niveaux d'intensité élevés et respectivement bas, de plusieurs signaux optiques (S1...S4), comprenant

- plusieurs lignes de fibre optique destinées à conduire chacune un signal optique,
- un coupleur (KOP), dont les entrées sont reliées aux lignes de fibre optique, et qui est destiné à réaliser la somme des signaux optiques amenés à ses entrées,
- un détecteur (DET) à élément de détection de valeur de seuil, dont l'entrée est reliée à la sortie du coupleur,

**caractérisé** en ce que

- dans la fraction de lignes de fibre optique qui, en présence de la combinaison prescrite de signaux, conduit des bits représentés par des niveaux d'intensité élevés, sont insérés des dispositifs d'inversion respectifs (INV1, INV2)
- à la sortie du détecteur ne peut être délivré qu'un résultat significatif, que lorsque le signal amené à son entrée présente un niveau d'intensité inférieur au niveau d'intensité élevé d'un signal optique individuel.

2. Agencement selon la revendication 1, **caractérisé** en ce que

- l'on a une ligne de fibre optique destinée à conduire un signal optique transmis en série dans lequel une suite prescrite de bits caractéristiques forme un mot de signal,

- la ligne de fibre optique est reliée par l'intermédiaire d'un fragmenteur (SP) aux dites plusieurs lignes de fibres optiques pour l'amenée du signal optique,
- dans chacune desdites plusieurs lignes de fibre optique est disposé un dispositif de retard (VER1...VER4) de façon telle, que le signal optique soit retardé d'un rang hiérarchique d'un bit caractéristique à l'intérieur du mot de signal.

3. Agencement selon la revendication 1 ou 2, **caractérisé** en ce que le détecteur est réalisé par un inverseur optique.

4. Agencement selon la revendication 1, 2 ou 3, **caractérisé** en ce que le dispositif d'inversion est réalisé par un inverseur optique.

5. Agencement selon l'une des revendications 3 ou 4, **caractérisé** en ce que l'inverseur optique est réalisé par le montage en série d'une photodiode et d'un élément semi-conducteur émettant de la lumière.

6. Agencement selon la revendication 5, **caractérisé** en ce que l'élément semi-conducteur émettant de la lumière est réalisé par une diode laser.

7. Agencement selon la revendication 5, **caractérisé** en ce que l'élément semi-conducteur émettant de la lumière est réalisé par une diode électroluminescente (LED).

8. Procédé de traitement d'une combinaison prescrite de bits représentés par des niveaux d'intensité élevés et respectivement bas, de plusieurs signaux optiques, selon lequel

- les signaux optiques sont regroupés, et
- la somme des intensités des signaux optiques regroupés est traitée,

**caractérisé** en ce que

- les bits représentés par des niveaux d'intensité élevés, de la combinaison prescrite, sont inversés avant le regroupement, en des niveaux d'intensité bas, et
- un résultat significatif n'est déterminé que lorsque la somme des intensités des signaux regroupés est inférieure au niveau d'intensité élevé d'un signal optique individuel.

9. Procédé selon la revendication 8, **caractérisé** en ce que

- lesdits plusieurs signaux optiques (S1...S4) sont engendrés par le fait qu'un signal optique (SÜS) transmis en série est subdivisé en lesdits plusieurs signaux, et

- chaque signal subdivisé est retardé conformément au rang hiérarchique d'un niveau d'intensité élevé et respectivement bas à l'intérieur du signal optique transmis en série.

10. Procédé selon la revendication 8 ou 9, **caractérisé** en ce que chaque signal individuel desdits plusieurs signaux optiques peut être rendu inactif.

FIG 1

FIG 2

FIG 3